# EUROPÄISCHE PATENTSCHRIFT

(11) **EP 0 432 785 B1**
(45) Veröffentlichungstag und Bekanntmachung des Hinweises auf die Patenterteilung: **14.04.1993**
(21) Anmeldenummer: 90124149.7
(22) Anmeldetag: 13.12.1990
(51) Int. Cl.: A63G 13/08, F16F 1/12

(54) **Vorrichtung zum Befestigen einer Stützfeder**
Anchoring arrangement for a support spring
Dispositif de fixation d'un ressort de support

(30) Priorität: 15.12.1989 DE 3941489
(43) Veröffentlichungstag der Anmeldung: 19.06.1991
(73) Patentinhaber: Nabinger, Erich, D-67468 Frankenstein (DE)
(72) Erfinder: Nabinger, Erich, D-67468 Frankenstein (DE)
(74) Vertreter: Fischer, Wolf-Dieter, Dipl.-Ing.

(56) Entgegenhaltungen:
- EP-A- 0 190 807
- DE-A- 3 245 983
- DE-A- 3 716 066

## Beschreibung

Die Erfindung betrifft eine Vorrichtung zum Befestigen einer als Schraubenfeder ausgebildeten Stützfeder an relativ zueinander beweglichen Teilen, von denen der eine Teil eine Grund- oder Bodenplatte bildet und der andere Teil ein federnd abgestütztes Gerät trägt, insbesondere ein Spielgerät bestehend aus einem ersten Befestigungsteil, der als U-förmiger Bügel ausgebildet ist und im Bereich einer an der Grundplatte anliegenden ersten Federwindung angreift, einem zweiten Befestigungsteil, der mit einem Widerlager für eine an der ersten Federwindung angrenzenden zweiten Federwindung versehen ist und gleichfalls an der an der Grundplatte anliegenden ersten Federwindung angreift.

Eine Vorrichtung mit diesen Merkmalen ist bekannt (DE-PS 32 45 983), bei der die erste Federwindung an der einen Seite mit Hilfe des U-förmigen Bügels an der Grundplatte befestigt wird, während die Festlegung der ersten sowie teilweise auch der zweiten Federwindung an einem L-förmigen Winkel erfolgt, der mit der Grundplatte verschraubt ist.

Die Grund- oder Bodenplatte wird nach der Montage der Vorrichtung zusammen mit dem entsprechenden Spielgerät im Boden verankert bzw. eingelassen. Zum Durchführen von Reparaturarbeiten und für das Entfernen der Spielgeräte für das Überwintern müssen derartige Vorrichtungen einfach montierbar bzw. demontierbar sein.

Bei einer anderen bekannten Vorrichtung (DE-PS 37 16 066) ist dazu der Standfuß des L-förmigen Befestigungsteiles verlängert und mittels einer zweiten Schraube mit der Bodenplatte verbunden. Der U-förmige Bügel des ersten Befestigungsteiles ist mit einem nach unten abgekröpften Verlängerungsteil des Standfußes verbunden und dabei in einer Ausnehmung der Bodenplatte angeordnet. Der wesentliche Nachteil dieser bekannten Vorrichtung besteht darin, daß der L-förmige Bügel mit einem über die gesamte Federbreite reichenden Standfuß, der darüberhinaus noch eine aufwendige Form besitzt, versehen ist. Die Herstellung eines derartigen Befestigungsteiles ist aufwendig und materialintensiv, wobei weiterhin die Montage aufwendig ist.

Der Erfindung liegt die Aufgabe zugrunde, eine Vorrichtung der eingangs genannten Art so auszubilden, daß bei Vereinfachung der Montage einfache Bauteile zum Festlegen der Stützfeder einsetzbar sind.

Diese Aufgabe wird nach der Erfindung dadurch gelöst, daß der erste Befestigungsteil an einem Klötzchen befestigt ist,
daß das Klötzchen in eine Ausnehmung der Bodenplatte passend einsetzbar ist,
und daß das Klötzchen mit einer Zunge versehen ist, die an der Unterseite der Bodenplatte abgestützt ist.

Vorteilhaft ist die Zunge von dem zweiten Befestigungsteil abgewandt.

Eine vorteilhafte Ausführungsform sieht vor, daß als zweites Befestigungsteil ein an der Bodenplatte befestigbarer Bock vorhanden ist, der Ausnehmungen für die erste und zweite Federwindung aufweist.

Weiterhin ist es vorteilhaft, daß als zweites Befestigungsteil zwei aufeinandergesetzte und an der Bodenplatte befestigte Haltebacken vorgesehen sind, wobei der untere Haltebacken die erste Federwindung mittels einer Ausnehmung an der Bodenplatte und der zweite Haltebacken die zweite Federwindung mittels einer Ausnehmung an dem unteren Haltebacken festlegt.

Es wird weiterhin vorgeschlagen, daß zwischen der Bodenplatte und der ersten Federwindung Auflageschalen vorgesehen sind.

Es ist weiterhin vorteilhaft, daß eine Auflageschale mit der Zunge versehen ist, die an der Unterseite der Bodenplatte abgestützt ist.

Schließlich ist es vorteilhaft, daß das Klötzchen an beiden Seiten mit einer Zunge versehen ist, wobei in der Bodenplatte zum Einsetzen eine der Größe des Klötzchens entsprechende Ausnehmung vorgesehen ist, während in der Haltestellung der verdickte Teil des Klötzchens innerhalb der Ausnehmung liegt und die Zungen an der Unterseite der Bodenplatte abgestützt sind.

Die Erfindung bringt den wesentlichen Vorteil, daß das erste Befestigungsteil mit dem Klötzchen an der ersten Federwindung vormontiert werden kann und dieser Teil dann einfach in die Bodenplatte eingehängt wird. Hinsichtlich des zweiten Befestigungsteiles ergibt sich eine wesentliche Materialersparnis, wobei darüberhinaus die einzelnen Teile der Befestigungsvorrichtung einfache Bauteile sind, die ggf. auch aus Kunststoff hergestellt werden können. Der Befestigungspunkt des ersten Befestigungsteiles läßt sich nach außen hin verlegen, so daß damit die Stabilität der Befestigungsvorrichtung bei Belastungen der Feder erhöht wird.

Die Erfindung wird in der nachfolgenden Beschreibung anhand von in den Zeichnungen dargestellten Ausführungsbeispielen näher erläutert.

Es zeigen,
- Fig. 1: die Befestigung der Feder an einer Grund- und Bodenplatte im Schnitt,
- Fig. 2: eine Draufsicht auf Fig. 1,
- Fig. 3: eine weitere Ausführungsform des zweiten Befestigungsteiles im Schnitt,
- Fig. 4: eine andere Ausführungsform des zweiten Befestigungsteiles im Schnitt,
- Fig. 5: eine Auflageschale für die erste Federwindung in einer Draufsicht,
- Fig. 6: einen Schnitt nach der Linie A-A in Fig. 5,
- Fig. 7 und 8: eine weitere Ausgestaltung des Klötzchens im Aufriß und Grundriß,
- Fig. 9: eine Draufsicht auf eine weitere Ausführungsform einer derartigen Auflageschale und
- Fig. 10: einen Schnitt durch diese Auflages-Schale in der Befestigungsposition an der Bodenplatte.

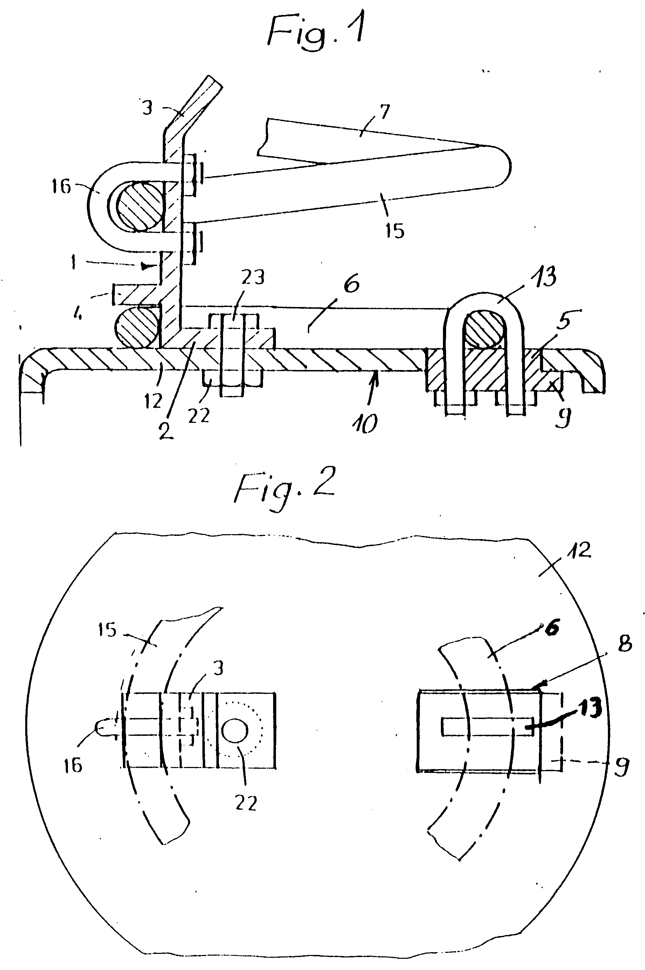

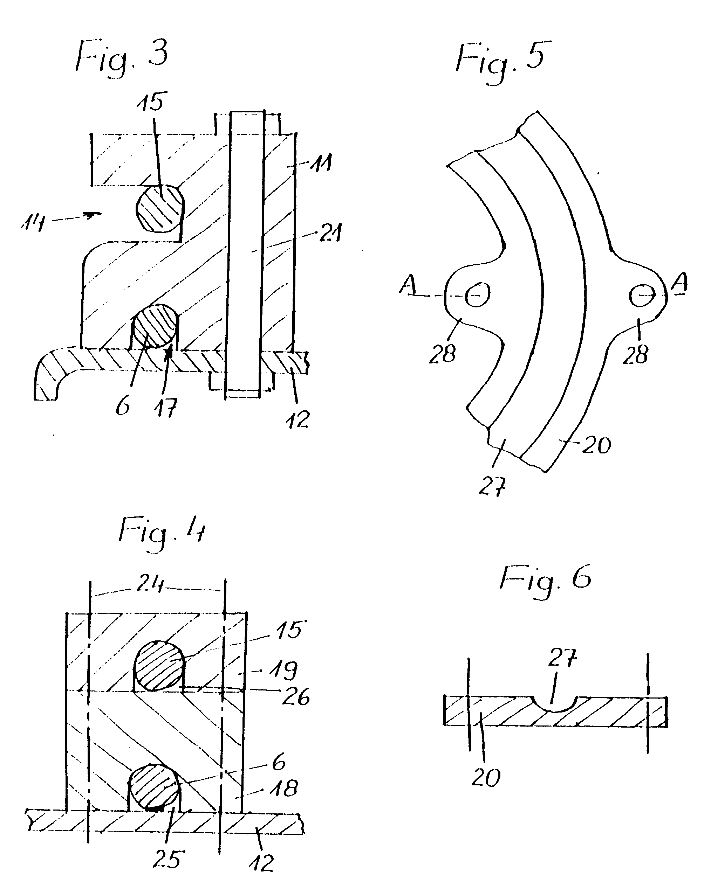

Die in den Fig. 1 und 2 dargestelte Vorrichtung weist einen L-förmigen Winkel 1 auf, wobei der Winkel 1 aus einem kurzen Schenkel 2 als Standfuß und einem langen Schenkel 3 zusammengesetzt ist. Entgegengesetzt zu dem Standfuß befindet sich ein Klemmteil 4, das gegenüber einer Bodenplatte 12 um die Dicke der ersten Federwindung 6 einer Stützfeder 7 nach oben versetzt ist.

Die erste Federwindung 6 ist an der Bodenplatte an der einen Seite mit Hilfe des L-förmigen Winkels 1 und des Klemmteiles 4 festgelegt und an der gegenüberliegenden Seite mit Hilfe eines ersten Befestigungsteiles 13 in Form eines U-förmigen Bügels, der an einem Klötzchen 5 befestigt ist. Das Klötzchen 5 ist bei dem dargestellten Ausführungsbeispiel rechteckförmig ausgebildet und in einer entsprechenden Ausnehmung 8 der Bodenplatte 12 eingesetzt. Weiterhin besitzt das Klötzchen 5 eine vorspringende Zunge 9, die von dem gegenüberliegenden zweiten Befestigungsteil 1 weggerichtet ist. Diese Zunge 9 ist an der Unterseite 10 der Bodenplatte 12 abgestützt.

Für die Montage der Vorrichtung wird lediglich der L-förmige Winkel 1 mit dem U-Bügel 16 an der zweiten Federwindung 15 befestigt sowie gegenüberliegend der Bügel 13 mit dem Klötzchen 5 an der ersten Federwindung 6. Danach läßt sich diese gesamte Anordnung in der Bodenplatte 12 einhängen und mittels der Schraubverbindung 22, 23 an der Bodenplatte 12 befestigen.

Anstelle des L-förmigen Winkels 1 kann auch ein Bock 11 verwendet werden, wie er in Fig. 3 dargestellt ist. Dazu befinden sich nach außen hin in einem derartigen quaderförmigen Teil eine seitlich offene Ausnehmung 14 für die zweite Federwindung 15 und eine nach unten gerichtete Ausnehmung 17 für die erste Federwindung 6. Dieser Bock 11 kann unmittelbar an der Bodenplatte 12 mittels einer Schraube 21 befestigt werden.

Bei der weiteren Ausführungsform gemäß Fig. 4 sind als zweites Befestigungsteil zwei übereinandergesetzte Haltebacken 18, 19 vorgesehen. Der untere Haltebacken 18 besitzt eine Ausnehmung 25, in der die erste Federwindung 6 aufgenommen wird. Die Höhe dieses Backens 18 entspricht dem Abstand der zweiten Federwindung 15, die mittels eines zweiten Haltebackens 19, der auf den unteren Backen 18 aufgesetzt ist, gehalten wird. Dazu befindet sich in dem Backen 19 eine Ausnehmung 26. Die Teile 18, 19 sind mit der Bodenplatte 12 mittels Schrauben 24 verschraubt.

Um eine ausreichende Auflagefläche der ersten Federwindung 6 auf der Bodenplatte zu erzielen, muß diese angeschliffen sein. Dieses Anschleifen der ersten Federwindung 6 ist jedoch aufwendig, wobei Auflageschalen 20 von Vorteil sind, wie sie in den Fig. 5 und 6 dargestellt sind. Diese Auflageschalen 20 besitzen in der Mitte eine Rille 27 zur Aufnahme der Federwindung 6 sowie seitliche Befestigungsösen 28. Diese Auflageschalen 20 brauchen nicht die gesamte Auflagefläche der Federwindung 6 abdecken. Es genügt beispielsweise zu beiden Seiten, d.h. im Bereich der Befestigungsteile 1, 13 derartige Auflageschalen 20, die in etwa einen Winkel von 30 - 60° abdecken, vorzusehen.

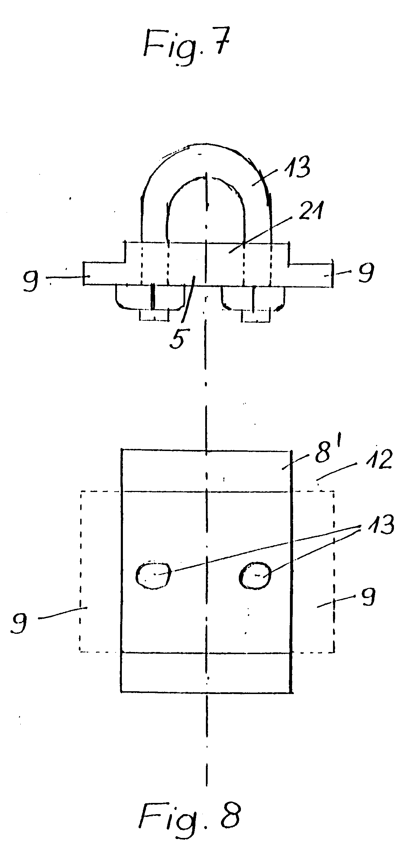

Die Figuren 7 und 8 zeigen eine weitere Ausgestaltung des Klötzchens mit dem U-förmigen Bügel 13, wobei zu beiden Seiten des verdickten Teiles 21 des Klötzchens 5 derartige Zungen 9 vorgesehen sind. Die Höhe dieses verdickten Teiles ist derart, daß die obere Fläche mit der oberen Fläche der Bodenplatte in einer Ebene liegt. In der Bodenplatte 12 ist weiterhin eine Ausnehmung 8′ vorgesehen, die bei dem gezeigten Beispiel rechteckförmig ist, entsprechend dem Grundriß des Klötzchens 5 einschließlich der Zungen 9. Zum Einsetzen des Klötzchens 5 ist diese Ausnehmung 8′ gegenüber der Gebrauchstellung um 90° gedreht. Nach dem Einsetzen des Klötzchens 5 wird dieses in der Haltestellung gedreht, wobei die beiden Zungen 9 an der Unterseite der Bodenplatte 12 anliegen und das verdickte Teil 21 innerhalb der Ausnehmung 8′ angeordnet ist.

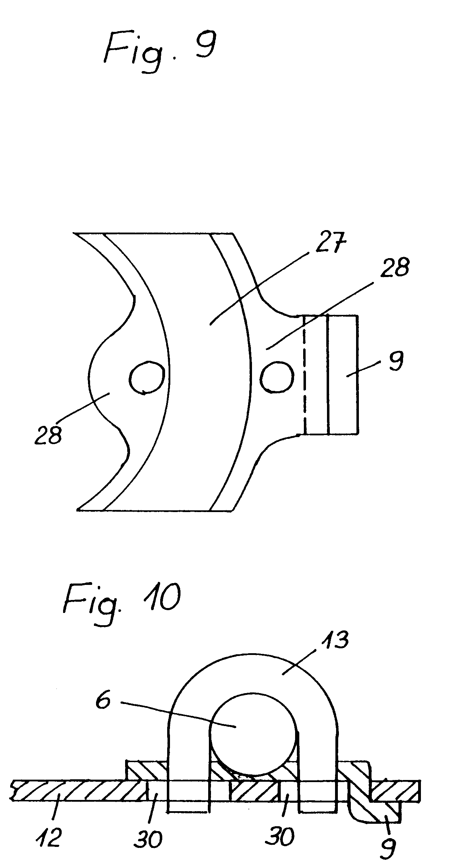

Die Figuren 9 und 10 zeigen eine weitere Ausführungsform für die Ausgestaltung einer derartigen Vorrichtung, wobei in Abwandlung des Klötzchens 5 gemäß Figur 1 in Verbindung mit der Auflageschale 20, gemäß den Figuren 5 und 6 diese Auflageschale 20 seitlich von der äußeren Befestigungsöse 28 mit einer Zunge 9 versehen ist, die sich an der Unterseite 10 der Bodenplatte 12 abstützt. Die beiden Befestigungsschrauben 30 für den Bügel 13 liegen hierbei innerhalb der Bodenplatte 12.

## Patentansprüche

1. Vorrichtung zum Befestigen einer als Schraubenfeder ausgebildeten Stützfeder (7) an relativ zueinander beweglichen Teilen, von denen der eine Teil eine Grund- oder Bodenplatte (12) bildet und der andere Teil ein federnd abgestütztes Gerät trägt, insbesondere ein Spielgerät, bestehend aus
einem ersten Befestigungsteil (13), der als U-förmiger Bügel ausgebildet ist und im Bereich einer an der Grundplatte (12) anliegenden ersten Federwindung (6) angreift,
einem zweiten Befestigungsteil (1), der mit einem Widerlager (16) für eine an der ersten Federwindung (6) angrenzenden zweiten Federwindung (15) versehen ist und gleichfalls an der an der Grundplatte (12) anliegenden ersten Federwindung (6) angreift,
dadurch gekennzeichnet, daß
der erste Befestigungsteil (13) an einem Klötzchen (5) befestigt ist,
daß das Klötzchen (5) in eine Ausnehmung (8) der Bodenplatte (12) passend einsetzbar ist,
und daß das Klötzchen (5) mit einer Zunge (9) versehen ist, die an der Unterseite (10) der Bodenplatte (12) abgestützt ist.

2. Vorrichtung nach Anspruch 1, dadurch gekennzeichnet, daß die Zunge (9) von dem zweiten Befestigungsteil (1) abgewandt ist.

3. Vorrichtung nach Anspruch 1 und 2, dadurch gekennzeichnet, daß als zweites Befestigungsteil (1) ein an der Bodenplatte (12) befestigbarer Bock (11) vorhanden ist, der Ausnehmungen (14, 17) für die erste und zweite Federwindung (6, 15) aufweist.

4. Vorrichtung nach Anspruch 1 und 2, dadurch gekennzeichnet, daß als zweites Befestigungsteil (1) zwei aufeinandergesetzte und an der Bodenplatte (12) befestigte Haltebacken (18, 19) vorgesehen sind, wobei der untere Haltebacken (18) die erste Federwindung (6) mittels einer Ausnehmung (25) an der Bodenplatte (12) und der zweite Haltebacken (19) die zweite Federwindung (15) mittels einer Ausnehmung (26) an dem unteren Haltebacken (18) festlegt.

5. Vorrichtung nach Anspruch 1 bis 4, dadurch gekennzeichnet, daß zwischen der Bodenplatte (12) und der ersten Federwindung (6) Auflageschalen (20) vorgesehen sind.

6. Vorrichtung nach Anspruch 5, dadurch gekennzeichnet, daß eine Auflageschale (20) mit der Zunge (9) versehen ist, die an der Unterseite (10) der Bodenplatte (12) abgestützt ist.

7. Vorrichtung nach Anspruch 1 und 2, dadurch gekennzeichnet, daß das Klötzchen (5) an beiden Seiten mit einer Zunge (9) versehen ist, wobei in der Bodenplatte (12) zum Einsetzen eine der Größe des Klötzchens (5) entsprechende Ausnehmung (8′) vorgesehen ist, während in der Haltestellung der verdickte Teil (21) des Klötzchens (5) innerhalb der Ausnehmung (8′) liegt und die Zungen (9) an der Unterseite (10) der Bodenplatte (12) abgestützt sind.

## Claims

1. Apparatus for securing a supporting spring (7), which is constructed as a helical spring, to parts which are movable relative to one another and of which the one part forms a base or bottom plate (12) and the other part bears a resiliently supported device, in particular a game device, comprising:
a first securing part (13) which is constructed as a U-shaped clip and which acts on the first spring winding (6) which bears against the base plate (12), and
a second securing part (1) which is provided with a thrust bearing (16) for a second spring winding (15) which is adjacent to the first spring winding (6) and also acts on the first spring winding (6) which bears against the base plate (12),
characterized in that
the first securing part (13) is secured to a block (5),
in that the block (5) may be inserted in fitting manner into a cutout (8) of the bottom plate (12),
and in that the block (5) is provided with a tongue (9) which is supported against the underside (10) of the bottom plate (12).

2. Apparatus according to Claim 1, characterized in that the tongue (9) faces away from the second securing part (1).

3. Apparatus according to Claims 1 and 2, characterized in that a bracket (11) which may be secured to the bottom plate (12) and which has cutouts (14, 17) for the first and second spring windings (6, 15) is provided as the second securing part (1).

4. Apparatus according to Claims 1 and 2, characterized in that two retaining cheeks (18, 19) which are placed one on top of the other and which are secured to the bottom plate (12) are provided as the second securing part (1), the lower retaining cheek (18) fixing the first spring winding (6) by means of a cutout (25) to the bottom plate (12), and the second retaining cheek (19) fixing the second spring winding (15) by means of a cutout (26) to the lower retaining cheek (18).

5. Apparatus according to Claims 1 to 4, characterized in that bearing shells (20) are provided between the bottom plate (12) and the first spring winding (6).

6. Apparatus according to Claim 5, characterized in that one bearing shell (20) is provided with the tongue (9) which is supported against the underside (10) of the bottom plate (12).

7. Apparatus according to Claims 1 and 2, characterized in that the block (5) is provided with a tongue (9) on either side, there being provided in the bottom plate (12) for the purpose of insertion a cutout (8′) corresponding to the size of the block (5), while in the retained position the thickened part (21) of the block (5) lies within the cutout (8′) and the tongues (9) are supported against the underside (10) of the bottom plate (12).

## Revendications

1. Dispositif pour la fixation d'un ressort d'appui (7) conformé en ressort cylindrique sur des pièces déplaçables l'une par rapport à l'autre dont l'une forme une plaque de base ou de fond (12) et l'autre, un appareil supporté élastiquement, en particulier un appareil de jeu, comprenant un premier élément de fixation (13) réalisé sous la forme d'un étrier en U et monté dans la région d'une première spire de ressort (6) appliquée contre la plaque de base (12), un second élément de fixation (1) qui est muni d'une butée (16) pour une seconde spire de ressort (15) avoisinant la première spire de ressort (6) et également bloqué sur la première spire de ressort (6) appliquée contre la plaque de base (12), **caractérisé en ce** que le premier élément de fixation (13) est fixé sur une petite cale (5), que ladite cale (5) peut être insérée de manière ajustée dans un évidement (8) de la plaque de fond (12), et que la cale (5) est munie d'une languette (9) qui prend appui sur la face inférieure (10) de la plaque de fond (12).

2. Dispositif selon la revendication 1, caractérisé en ce que la languette (9) est dirigée dans le sens opposé au second élément de fixation (1).

3. Dispositif selon l'une des revendications 1 et 2, caractérisé en ce qu'il comprend comme second élément de fixation (1) une patte d'attache (11) pouvant être fixée sur la plaque de fond (12) et pourvue d'évidements (14, 17) pour les première et deuxième spires de ressort (6, 15).

4. Dispositif selon l'une des revendications 1 et 2, caractérisé en ce qu'il comprend comme second élément de fixation (1) deux mâchoires de retenue (18, 19) fixées sur la plaque de fond (12), la mâchoire de retenue inférieure (18) bloquant la première spire de ressort (6) au moyen d'un évidement (25) sur la plaque de fond (12), et la seconde mâchoire de retenue (19) immobilisant la seconde spire de ressort (15) au moyen d'un évidement (26) sur la mâchoire de retenue inférieure (18).

5. Dispositif selon l'une des revendications 1 à 4, caractérisé en ce que des cuvettes d'appui (20) sont prévues entre la plaque de fond (12) et la première spire de ressort (6).

6. Dispositif selon la revendication 5, caractérisé en ce qu'une cuvette d'appui (20) est munie de la languette (9) qui prend appui sur la face inférieure (10) de la plaque de fond (12).

7. Dispositif selon l'une des revendications 1 et 2, caractérisé en ce que la petite cale (5) est munie des deux côtés d'une languette (9), dans la plaque de fond (12) étant prévu, pour l'insertion, un évidement (8′) correspondant aux dimensions de la cale (5), tandis que dans la position de retenue, l'élément plus épais (21) de la cale (5) se situe à l'intérieur de l'évidement (8′) et que les languettes (9) s'appuient contre la face inférieure (10) de la plaque de fond (12).
